Europäisches Patentamt

European Patent Office

Office européen des brevets

(19)

(11) **EP 0 976 935 B1**

(12) **EUROPÄISCHE PATENTSCHRIFT**

(45) Veröffentlichungstag und Bekanntmachung des Hinweises auf die Patenterteilung:
**27.03.2002 Patentblatt 2002/13**

(51) Int Cl.$^7$: **F16B 39/10**

(21) Anmeldenummer: **99114380.1**

(22) Anmeldetag: **22.07.1999**

(54) **Vorrichtung zur formschlüssigen Sicherung eines Bolzenkopfes**

Device for positively locking a bolt

Dispositif de blocage positif d'un boulon

(84) Benannte Vertragsstaaten:
**AT BE CH CY DE DK ES FI FR GB GR IE IT LI LU MC NL PT SE**

(30) Priorität: **30.07.1998 DE 19834464**

(43) Veröffentlichungstag der Anmeldung:
**02.02.2000 Patentblatt 2000/05**

(73) Patentinhaber: **EADS Deutschland GmbH
81663 München (DE)**

(72) Erfinder:
• **Perez, Juan
83620 Feldolling (DE)**
• **Schneider, Heinrich
81663 Ottobrunn (DE)**

(56) Entgegenhaltungen:
**DE-C- 465 060**      **DE-U- 8 308 064**
**GB-A- 2 129 898**      **GB-A- 2 176 560**
**US-A- 5 772 373**

## Beschreibung

Die Erfindung betrifft eine Bolzenkopfsicherung mit einem Sicherungsring, der am Bauteil formschlüssig gegen Drehung gesichert und zwischen dem Bolzenkopf und dem Bauteil geklemmt ist, und mit Kupplungselementen, die mit dem Sicherungsring lösbar in Eingriff stehen.

Die Bolzenkopfsicherung findet stets in solchen Fällen Anwendung, wo ein unbeabsichtigtes Lösen des Bolzens vermieden werden muß.

Die DE 83 08 064 U1 1 beschreibt mit den dortigen Figuren 165 und 167 eine Bolzenkopfsicherung bestehend aus einer Sicherungsscheibe, die formschlüssig mit einem vorgespannten Bauteil verbunden ist und einem Kupplungsteil, welches an der Schlüsselkontur des Bolzenkopfes anliegt. Die Sicherungsscheibe hat eine radiale Ringnut und am Umfang einzelne Nuten. Weiterhin hat die Sicherungsscheibe mindestens ein Sperrelement ausgebildet, so daß eine Arretierung der Sicherungsscheibe am Bauteil möglich ist.

Ein Kupplungsteil ist das Verbindungsglied zwischen dem Bolzenkopf und der Sicherungsscheibe. In einer Formschlußbildung mit dem Bolzenkopf umschließt das Kupplungsteil mit seiner Hohlform die Außenform des Bolzenkopfes. Das Kupplungsteil besitzt einzelne Schnapparme. Der Schnapparm erhält durch eine axiale Nut der Sicherungsscheibe eine vorbestimmte Führung und die Nase eines Schnapparmes wird in die radiale Ringnut der Sicherungsscheibe eingedrückt. Ein Zuordnen der Schnapparme zu den Nuten des Sicherungsringes erfordert eine Drehung des Bolzenkopfes um einen Winkelbetrag, der stets zu einer unerwünschten Abweichung einer vorgegebenen Bolzenvorspannung oder einer Bolzenkopfposition führt.

Weiterhin ist aus der DE 41 28 508 C1 eine Achsmutter für ein Radlager mit auf einem Achsschenkel drehbar gelagerter Nabel bekannt, wobei im freien Ende des Achsschenkels orthogonal sich kreuzende Bohrungen und in einer Krone der Achsmutter axial verlaufende Schlitze zum Einführen eines Verriegelungsbolzens angeordnet sind. Um eine sichere und gleichzeitig auch feine Lagereinstellung zu ermöglichen, ist die Teilung der Schlitze in der Krone der Achsmutter asymmetrisch ausgebildet. Bei dem Gegenstand der DE 41 28 508 C1 handelt es sich um eine Muttersicherung, bei der der minimale Verdrehwinkel der Achsmutter auf 15 ° reduziert werden kann. Mit diesem Verdrehwinkel werden in Abhängigkeit von der Steuerung des Gewindes an der Achsmutter und dem Achsschenkel axiale Verstellwinkel erreicht, die nur einige 100stel Millimeter betragen und deshalb eine verbesserte Lagereinstellung ermöglichen.

Aufgabe der Erfindung ist es, bei der Fixierung eines Bauteils gegenüber einer Struktur, eine exakte Vorspannung eines verbindenden Bolzens oder eine exakte Position des Bolzenkopfes mittels einer Bolzenkopfsicherung zu gewährleisten.

Die Aufgabe nach der Erfindung wird gelöst entsprechend den kennzeichnenden Merkmalen des Anspruchs 1.

Die Bolzenkopfsicherung hat einen Sicherungsring, der formschlüssig zwischen dem Bolzenkopf und einem zu klemmenden Bauteil geklemmt ist. Der Sicherungsring ist formschlüssig und lösbar am Bauteil gesichert bzw. arretiert. Ein Kronenring, der an der Schlüsselkontur des Bolzenkopfes auf Anschlag anliegt, ist dem Sicherungsring koaxial zugeordnet. Folglich ist der Kronenring an seinem Innenumfang der Schlüsselkontur des Bolzenkopfes angepaßt.

Sicherungsring und Kronenring haben einen einheitlichen Außendurchmesser. Ein Kronenring ist drehfest auf dem Bolzenkopf angeordnet und ist somit koaxial dem Sicherungsring zugeordnet. Sicherungsring und Kronenring bilden eine Nonius-Anordnung, die mit Kupplungselementen gesichert ist. Die Nonius-Anordnung wird gebildet, indem am äußeren Umfang des Sicherungsrings in regelmäßigen Abständen Arretierplätze gleicher geometrischer Gestalt angeordnet sind und der Kronenring am äußeren Umfang in regelmäßigen Abständen Arretierplätze oder Kupplungselemente gleicher geometrischer Gestalt aufweist, wobei die Anzahl der Arretierplätze am Sicherungsring und die Anzahl der Arretierplätze oder Kupplungselemente am Kronenring mindestens um eins differiert, und ein Kupplungselement in einem Arretierplatz des Sicherungsrings eingreift und drehfest sichert. Der Begriff des Nonius ist beispielsweise in Anwendung bei der Schublehre bekannt. Die Nonius-Anordnung ermöglicht, daß sich am Umfang von Sicherungsring und Kronenring mindestens ein Arretierplatz des Sicherungsrings im wesentlichen einem Arretierplatz oder einem Kupplungselement des Kronenrings gegenüber liegt, ohne daß eine zusätzliche Drehung eines der beiden Ringe erforderlich wird. Das bedeutet, daß ein Sicherungsring mit einer Anzahl von n Arretierplätzen ausgerüstet ist, während der Kronenring mit n+1 oder n-1 Arretierplätzen oder Kupplungselementen ausgerüstet ist.

Die Arretierplätze können als Nuten oder Schlitze ausgeführt sein. Sie haben eine gleiche geometrische Gestalt. Die Kupplungselemente können vorteilhafterweise als Druckstifte oder Federkrallen ausgeführt sein. Sie haben untereinander eine gleiche geometrische Gestalt und sind so beschaffen, daß ein Kupplungselement auf einen Arretierplatz führbar ist.

Bei einer kostengünstigen Ausgestaltung haben Sicherungsring und Kronenring am äußeren Umfang Nuten, die regelmäßig beabstandet sind. Die Nuten am Sicherungsring und die Nuten am Kronenring haben eine einheitliche Weite. Die Anzahl der Nuten zwischen Sicherungsring und Kronenring differiert um mindestens eine Nut. Sicherungsring und Kronenring bilden somit ebenfalls einen Nonius. Dabei ist es unerheblich, ob am Sicherungsring oder ob am Kronenring die größere oder die kleinere Zahl von Nuten angebracht ist. Die Nuten am Sicherungsring sind in einem regelmäßigen Abstand an der äußeren Mantelfläche verteilt und ebenso sind die Nuten am Kronenring in einem regelmäßigen Abstand verteilt.

Zwischen einer Nut des Kronenringes und einer Nut des Sicherungsringes wird mindestens eine Nutgasse gebildet, deren minimale Weite am Übergang zwischen beiden Nuten mindestens der Stärke eines Sicherungsnockens entspricht.

Die Nutgasse wird gebildet mittels zweier, in axialer Richtung hintereinander angeordneten Nuten. Ein Kupplungselement hat den Sicherungsnocken ausgebildet. Mehrere Kupplungselemente können als Federstahlklaue ausgebildet sein. Die Kupplungselemente liegen am Bolzenkopf an und halten den Sicherungsring und den Kronenring in der gegebenen Position zusammen. Durch das Eingreifen des Sicherungsnocken in die Nutgasse wird ein nachträgliches Verdrehen des Kronenringes blockiert.

Mit der erfindungsgemäßen Lösung wird erreicht, daß mit Einsatz der Bolzensicherung die exakte Vorspannung des Bolzens oder die Position des Bolzenkopfes beibehalten werden kann. Dieser Vorteil der Bolzenkopfsicherung ist mit geringem Kostenaufwand erreichbar. Die Bolzenkopfsicherung ist bei Bedarf lösbar.

Die Erfindung wird nachfolgend anhand eines Ausführungsbeispiels erläutert. Es werden gezeigt:

**Figur 1** Explosivdarstellung einer Bolzenkopfsicherung,
**Figur 2** Bolzenkopfsicherung gemäß Figur 1 im montierten Zustand
**Figur 3** Darstellung der minimalen Weite $F_{min}$ einer Nutgasse.
**Figur 4** Explosivdarstellung einer weiteren Ausführungsform zur Bolzenkopfsicherung
**Figur 5** Bolzenkopfsicherung gemäß Figur 4 im montierten Zustand mit geschnittenem Kronenring
**Figur 6** Kronenring mit Federkrallen als Kupplungselemente

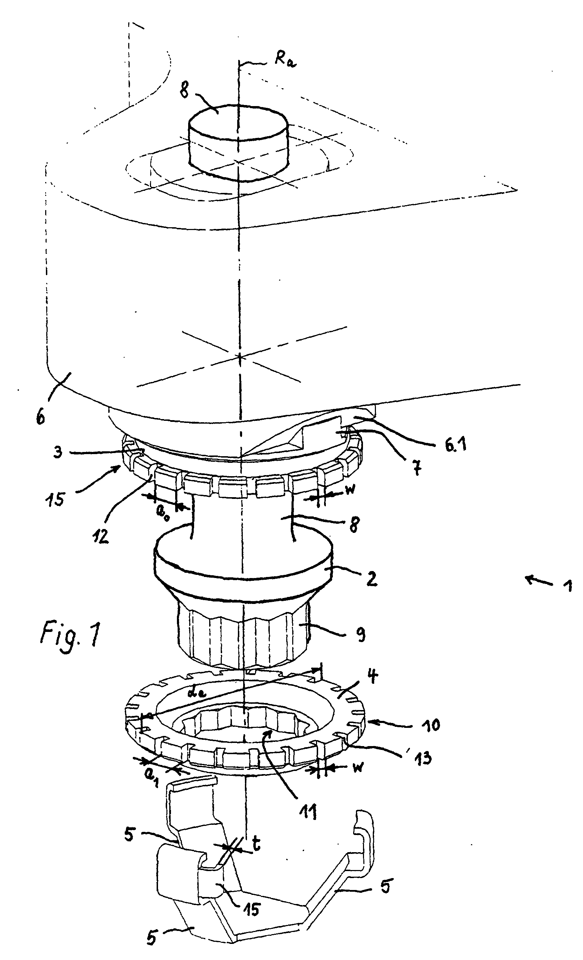

Ein Bauteil 6 nimmt gemäß **Figur 1** einen Bolzen 8 auf. Der Bolzen 8 ist nicht in seiner.gesamten Länge dargestellt. Dieser Bolzen 8 wird weiterhin mit einem Gewinde in eine Struktur (z. B. Trägerplatte) eingreifen und dort mit dem Bauteil 6 verschraubt. Aus Gründen der Vereinfachung ist die Struktur nicht dargestellt. Bei dem an die Struktur anzubauenden Bauteils 6 ist eine exakte

Bolzenvorspannung bzw. eine exakte Position des Bolzenkopfes 2 zu gewährleisten. Die Bolzenkopfsicherung darf diese nicht verändern.

Diese Anforderung wird mit der erfindungsgemäßen Bolzenkopfsicherung 1 erfüllt, die einen formschlüssigen Anschlag zum Bolzenkopf sichert. Zwischen Bolzenkopf 2 und Bauteil 6 ist ein Sicherungsring 3 angeordnet. Dieser Sicherungsring 3 hat mindestens ein Sperrelement 7. Im vorliegenden Beispiel kann dies ein Nocken sein, der in eine entsprechende Aufnahmefläche 6.1 des Bauteils 6 eingreift. Somit ist der Sicherungsring 3 gegen ein Verdrehen (d. h. gegen ein Lösen) fixiert. Mit einem geeigneten Werkzeug (z. B.

Drehmomentschlüssel), der an der Schlüsselkontur 9 des Bolzenkopfes 2 angreift, wird der Bolzen 8 festgezogen und mit einer definierten Kraft vorgespannt. Dabei wird auch der Sicherungsring 3 in seiner Position geklemmt. Formschlüssig zur Schlüsselkontur 9 des Bolzenkopfes 2 wird ein Kronenring 4 auf Anschlag auf den Bolzenkopf 2 aufgesetzt. Somit sind Sicherungsring 3 und Kronenring 4 zueinander koaxial angeordnet. Die innere Mantelfläche 11 des Kronenringes 4 ist beispielsweise als Vielkant (z. B. 12-Kant) adäquat der Schlüsselfläche 9 ausgebildet, die ebenfalls als Vielkant (12-Kant) gestaltet ist. Sicherungsring 3 und Kronenring 4 haben an ihrer äußeren Mantelfläche 15, 10 eine Vielzahl Nuten 12, 13. Einer von beiden (Sicherungsring oder Kronenring) hat eine wählbare Anzahl von n Nute. Der andere Ring hat dann eine größere Anzahl, mindestens n+1 Nute haben oder eine kleinere Anzahl (n-1). Im vorliegenden Beispiel hat der Sicherungsring 3 beispielsweise 20 Nute und der Kronenring 4 hat 21 Nute. Am Sicherungsring 3 sind die 20 Nute an der äußeren Mantelfläche 15 in einem gleichmäßigen Abstand $a_o$ angeordnet. Die 20 Nute haben eine einheitliche Weite w. Die 21 Nute am Kronenring 4 sind ebenfalls an der Mantelfläche in einem gleichmäßigen Abstand, jedoch in dem Abstand $a_1$ angeordnet. Die Weite w der Nute am Kronenring 4 ist identisch mit der Weite w der Nute am Sicherungsring 3. Auf diese Art und Weise der Ausgestaltung bilden Sicherungsring 3 und Kronenring 4 bezüglich der Anzahl der Nute einen Nonius N. Damit wird gewährleistet, daß in jeder Position des verdrehbaren Kronenrings 4 eine Nut 13 an einem Umfangsort (äußere Mantelfläche 10) auffindbar ist, die in axialer Richtung $R_a$ mit einer benachbarten Nut 12 des Sicherungsrings 3 eine Nutgasse 16 bildet.

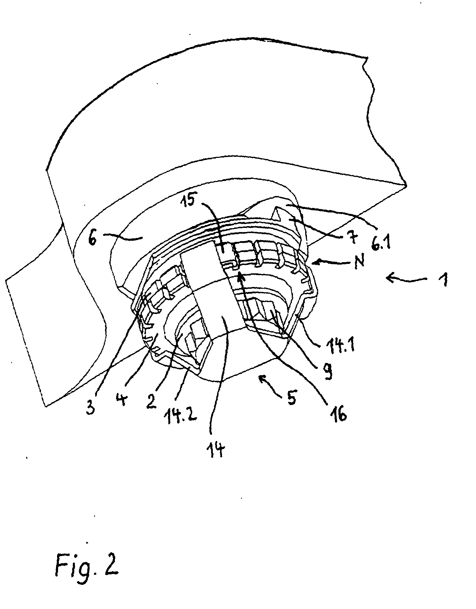

**Figur 2** zeigt eine solche Nutgasse 16. Befindet sich der Bolzenkopf 2 unter der gewünschten, eingestellten Vorspannung, ist an den Mantelflächen 10, 15 mindestens eine Nutgasse 16 auffindbar, deren Weite F an dem Übergang zwischen beiden Nuten mindestens gleich oder größer der Stärke t eines Sicherungsnockens ist. Diese Weite F ist also auf den Übergang zwischen zwei in axialer Richtung benachbarte Nuten bezogen. Diese Weite F der Nutgasse ist jedoch stets kleiner als die Weite w einer einzelnen Nut. Diesen Sachverhalt zeigt

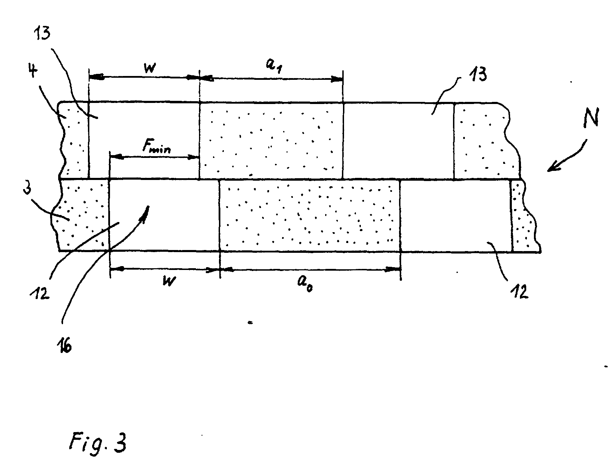

**Figur 3.** Die Weite F ist bestimmend für die Aufnahme eines Sicherungsnockens 15 von einem Kupplungselement 5. Es sind noch zwei weitere Kupplungselemente 5 gezeigt, die jedoch keinen Sicherungsnocken tragen. Die 3 Kupplungselemente 5 sind beispielsweise als Federstahlklaue ausgeführt. Diese Federstahlklaue wird formschlüssig auf den Bolzenkopf 2 aufgesetzt, so daß der Sicherungsnocken 15 eines Kupplungselements 5 in die Nutgasse 16 eingreift und dabei alle Kupplungselemente 5 zusätzlich - wie Figur 2 zeigt - hinter der äußeren Mantelfläche 15 des Sicherungsringes 3 verspannt werden. Somit werden der Sicherungsring 3 und der Kronenring 4 durch die Federstahlklaue zusammengehalten. Für eine Position des Kronenringes 4 gilt immer

$$\text{minimale Weite } F_{min} \leq \quad \text{Weite F der Nutgasse 16} \leq \quad \text{Weite w der Nut der Nutgasse 16}$$

wobei

$$\text{minimale Weite } F_{min} = w - \frac{1}{2}\left[\frac{\ddot{a}u\beta erer\,Umfang\,Sicherungsring}{Anz.Nute\,Sicherungsring} - \frac{\ddot{a}u\beta erer\,Umfang\,Kronenring}{Anz.Nute\,Kronenring}\right]$$

ist.

Nachfolgend sei anhand eines Rechenexempels der vorangehende Sachverhalt erläutert. Beispielsweise seien:

Bolzendurchmesser 16 mm,
Sicherungsring bzw. Kronenring im Außendurchmesser 38 mm,
äußerer Umfang des Sicherungsringes bzw. des Kronenringes 119 mm,
Weite einer Nut 1,5 mm,
Sicherungsring mit 20 Nute,
Kronenring mit 21 Nute

Für eine Position des Kronenringes gilt immer

(a)

$$\text{Weite } F_{min} \leq \quad \text{Weite F der Nutgasse} \leq \quad \text{Weite w der Nut}$$

(b)

$$\text{Weite } F_{min} = w - \frac{1}{2}\left[\frac{119}{20} - \frac{119}{21}\right]$$

$$\text{Weite } F_{min} = 1,36 \text{ mm}$$

Die Stärke t des Sicherungsnockens 15 muß $t \leq \text{Weite } F_{min}$ sein, beispielsweise t = 1,0 mm. Bei solchen Maßverhältnissen wäre die mittlere Einstellgenauigkeit

$$\alpha = \frac{1,36-1,0}{119}\cdot 360°$$

$$\alpha = 1,1°$$

d. h. es ergäbe sich ein Spiel des Bolzenkopfes bzw. eine Abweichung aus der gegebenen Position von 1,1°.

Bei einer Stärke t = 1,2 mm des Sicherungsnockens 15 wird die mittlere Einstellgenauigkeit auf 0,5° verbessert.

Anhand dieses Rechenbeispiels wird deutlich, daß mit der erfindungsgemäßen Bolzenkopfsicherung 1 eine exakte Bolzenvorspannung oder eine exakte Position des Bolzenkopfes 2 erreichbar ist, wobei das Spiel des Sicherungsnockens 15 vernachlässigbar ist.

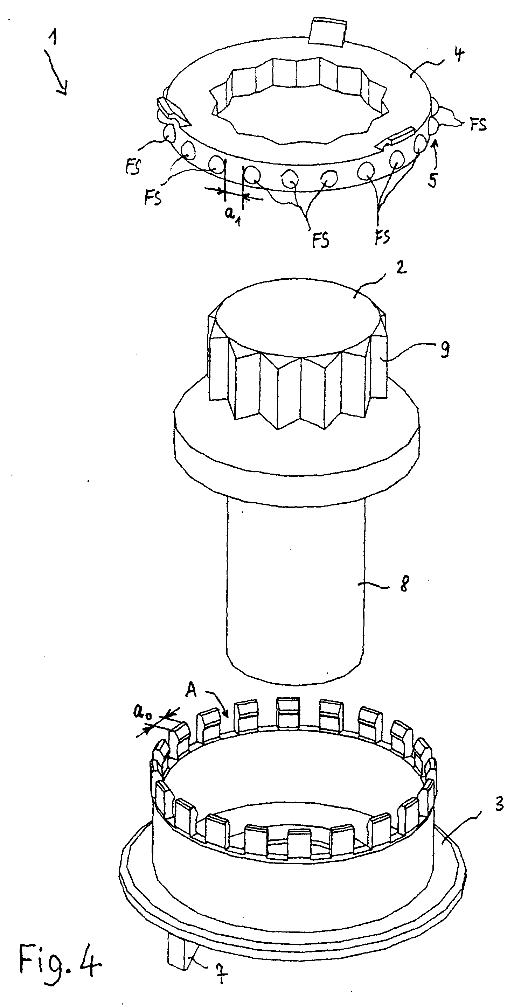

**Figur 4** zeigt eine weitere Ausführungsform zur Bolzenkopfsicherung in Explosivdarstellung. Es ist ausschnittsweise der Bolzen 8 gezeigt mit seinem Bolzenkopf 2. Der Bolzenkopf 2 hat eine als Vielkant ausgebildete Schlüsselkontur 9 und einen zwischen Schlüsselkontur 9 und Bolzen liegende Anschlagfläche. Der Bolzen 8 wird in den Sicherungsring eingeführt und mit Drehung des Bolzens wird der Sicherungsring 3 zwischen Anschlag des Bolzenkopfes 2 und Bauteil geklemmt. Anschließend wird der Kronenring auf den Bolzenkopf 2 bis zur Anschlagfläche des Bolzenkopfes 2 aufgesetzt. Der innere Umfang des Kronenringes ist entsprechend der Schlüsselkontur ausgebildet. Dadurch wird der Kronenring drehfest am Bolzenkopf positioniert. Eine Nonius-Anordnung wird zwischen Sicherungsring 3-und Kronenring 4 gebildet, indem am äußeren Umfang des Sicherungsrings 3 in regelmäßigen Abständen $a_0$ Arretierplätze A gleicher geometrischer Gestalt angeordnet sind. Die Arretierplätze A können beispielsweise als Nuten oder Schlitze ausgeführt sein.

Der Kronenring 4 hat am äußeren Umfang in regelmäßigen Abständen $a_1$ Kupplungselemente 5 gleicher geometrischer Gestalt angeordnet. Im vorliegenden Beispiel sind die Kupplungselemente 5 als Federstift FS ausgebildet. Solch ein Federstift wird durch Federspannung in radialer Richtung gedrückt und ist somit zwischen 2 Anschlagpunkten in radialer Richtung bewegbar. Mit koaxialer Zuordnung des Kronenrings zu dem Sicherungsring findet sich im Umfangsbereich der Arretierplätze A ein einzelner Arretierplatz A der exakt einen Federstift FS aufnimmt. Das bedeutet, daß die restlichen Federstifte FS durch Stege mit der Breite $a_0$ in gedrückter Position gehalten werden. Ein einzelner Federstift FS (in ungedrückter Position) übernimmt die Sicherung gegen Verdrehen, während die verbleibenden Federstifte durch ihre Anspannung (gedrückte Position) den Kronenring 4 axial in seiner Lage halten.

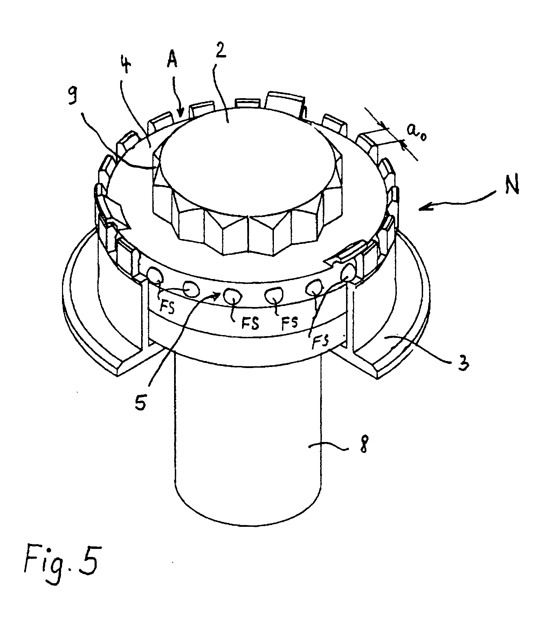

**Figur 5** zeigt die Bolzenkopfsicherung gemäß Figur 4 im montierten Zustand mit geschnittenem Kronenring.

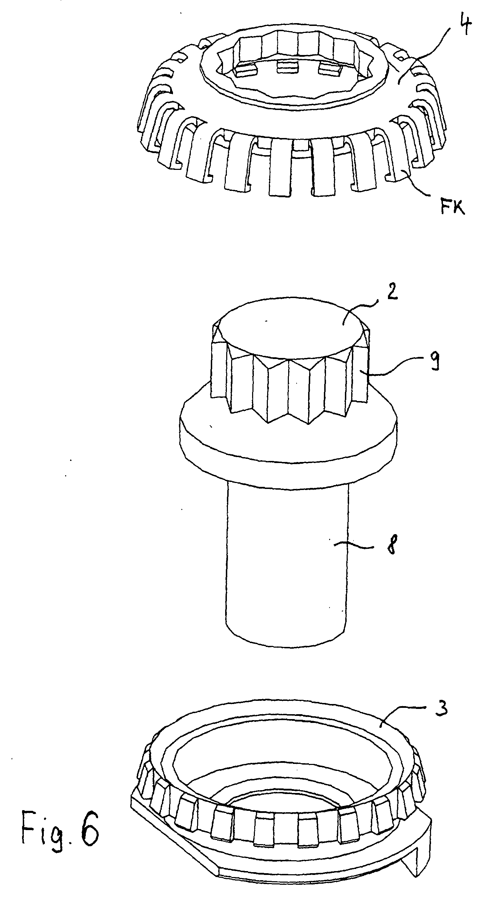

Eine weitere denkbare Ausgestaltung der Nonius-Anordnung N zeigt **Figur 6.** Dort ist der Kronenring 4 mit Kupplungselementen 5 ausgerüstet, die durch einzelne Federkrallen FK gebildet sind. Eine dieser Federkrallen FK übernimmt das drehfeste Sichern des Kronenrings 4 gegenüber dem Sicherungsring 3, wobei alle Federkrallen an den Stegen mit der Breite $a_0$ verspannt werden. Dadurch wird ein Entfernen bzw.Abfallen des Kronenrings 4 vermieden.

**Patentansprüche**

1. Bolzenkopfsicherung (1) mit einem Sicherungsring (3), der an einem Bauteil (6) formschlüssig gegen Drehung gesichert und zwischen einem Bolzenkopf (2) und dem Bauteil (6) geklemmt ist, und mit Kupplungselementen (5), die mit dem Sicherungsring (3) lösbar in Eingriff stehen, **dadurch gekennzeichnet, daß** ein drehfest auf dem Bolzenkopf (2) angeordneter Kronenring (4) dem Sicherungsring (3) koaxial zugeordnet ist, und der Sicherungsring (3) und der Kronenring (4) über den äußeren Umfang den hinsichtlich Arretierplätzen (A) eine Nonius-Anordnung (N) bilden, die mit den Kupplungselementen (5) gesichert ist.

2. Bolzenkopfsicherung (1) nach Anspruch 1, **dadurch gekennzeichnet, daß** die Nonius- Anordnung (N) gebildet ist, indem die Arretierplätze (A, 12) des Sicherungsrings (3) in regelmäßigen Abständen ($a_0$) gleicher geometrischer Gestalt angeordnet sind und der Kronenring (4) am äußeren Umfang in regelmäßigen Abständen ($a_1$) die Arretierplätze (A, 13) oder Kupplungselemente (5) gleicher geometrischer Gestalt aufweist, wobei die Anzahl der Arretierplätze (A, 12) am Sicherungsring (3) und die Anzahl der Arretierplätze (A, 13) oder Kupplungselemente (5) am Kronenring (4) mindestens um eins differiert, und ein Kupplungselement (5) in einem Arretierplatz (A, 12) des Sicherungsringes (3) eingreift und drehfest sichert.

3. Bolzenkopfsicherung (1) nach einem der beiden Ansprüche 1 und 2, **dadurch gekennzeichnet, daß** die Arretierplätze (A) als Nuten (12, 13) ausgebildet sind.

4. Bolzenkopfsicherung (1) nach einem der beiden Ansprüche 1 und 2, **dadurch gekennzeichnet, daß** die Kupplungselemente (5) als Federkrallen (FK) ausgebildet sind.

5. Bolzenkopfsicherung (1) nach einem der beiden Ansprüche 1 und 2, **dadurch gekennzeichnet, daß** die Kupplungselemente (5) als Federstifte (FS) ausgebildet sind.

6. Bolzenkopfsicherung (1) nach Anspruch 1, **dadurch gekennzeichnet, daß** der Sicherungsring (3) und der Kronenring (4) einen einheitlichen Außendurchmesser ($d_a$) haben.

7. Bolzenkopfsicherung (1) nach einem der Ansprüche 1 bis 3 oder 6, **dadurch gekennzeichnet, daß** der Kronenring (4) an seinem Innenumfang einer Schlüsselkontur (9) des Bolzenkopfes (2) formschlüssig angepaßt ist und der drehfest auf dem Bolzenkopf (2) angeordnete Kronenring (4) dem Sicherungsring (3) zugeordnet ist und Sicherungsring (3) und Kronenring (4) am äußeren Umfang Nuten (12, 13) aufweisen, die regelmäßig beabstandet sind, wobei die Anzahl der Nuten zwischen Sicherungsring (3) und Kronenring (4) mindestens um eine Nut differiert, und daß ein Kupplungselement (5) einen Sicherungsnocken (15) aufweist, der mit einer Stärke (t) so bemessen ist, daß er in eine Nutgasse (16) eingreift, die mittels zweier, in axialer Richtung hintereinander angeordneter Nuten gebildet ist und die am Übergang beider Nuten mindestens eine Weite ($F_{min}$) aufweist.

8. Bolzenkopfsicherung (1) nach Anspruch 7, **dadurch gekennzeichnet, daß** die Nute (12, 13) am Sicherungsring (3) und am Kronenring (4) eine einheitliche Weite (w) besitzen.

9. Bolzenkopfsicherung (1) nach Anspruch 7, **dadurch gekennzeichnet, daß** die Nuten (12) am Sicherungsring (3) in regelmäßigen Abständen ($a_0$) angeordnet sind.

10. Bolzenkopfsicherung (1) nach Anspruch 7, **dadurch gekennzeichnet, daß** die Nuten (13) am Kronenring in regelmäßigen Abständen ($a_1$) angeordnet sind.

11. Bolzenkopfsicherung (1) nach Anspruch 7, **dadurch gekennzeichnet, daß** die Nutgasse (16) eine minimale Weite ($F_{min}$) hat, die mindestens der Stärke (t) des Sicherungsnockens (15) entspricht.

12. Bolzenkopfsicherung (1) nach Anspruch 11, **dadurch gekennzeichnet, daß** die minimale Weite ($F_{min}$) der Nutgasse (16) am Übergang zwischen einer Nut des Sicherungsringes (3) und einer Nut des Kronenringes (4) gebildet ist.

13. Bolzenkopfsicherung (1) nach Anspruch 7, **dadurch gekennzeichnet, daß** die Kupplungselemente (5) mittels Federstahlklauen gebildet sind.

**Claims**

1. Bolt-head securing arrangement (1) having a securing ring (3) which is secured to a component (6) in a form-locking manner to resist torsion and is clamped between a bolt head (2) and the component (6), and having coupling elements (5) which are detachably engaged with the securing ring (3), **characterized in that** a crown ring (4) which is arranged on the bolt head (2) in a torsion-resisting manner is coaxially coordinated with the securing ring (3), and over the outer circumference with regard to locking locations (A) the securing ring (3) and the crown ring (4) form a vernier arrangement (N) which is secured by means of the coupling elements (5).

2. Bolt-head securing arrangement (1) according to claim 1, **characterized in that** the vernier arrangement (N) is formed by virtue of the fact that the locking locations (A, 12) of the securing ring (3) are arranged at regular intervals ($a_0$) of identical geometrical form, and the crown ring (4) has the locking locations (A, 13) or coupling elements (5) of identical geometrical form on its outer circumference at regular intervals ($a_1$), with the number of locking locations (A, 12) on the securing ring (3) and the number of locking locations (A, 13) or coupling elements (5) on the crown ring (4) differing by at least one, and a coupling element (5) engages in a locking location (A, 12) of the securing ring (3) and effects torsion-resisting securement.

3. Bolt-head securing arrangement (1) according to one of the two claims 1 and 2, **characterized in that** the locking locations (A) are formed as grooves (12, 13).

4. Bolt-head securing arrangement (1) according to one of the two claims 1 and 2, **characterized in that** the coupling elements (5) are formed as spring claws (FK).

5. Bolt-head securing arrangement (1) according to one of the two claims 1 and 2, **characterized in that** the coupling elements (5) are formed as spring pins (FS).

6. Bolt-head securing arrangement (1) according to claim 1, **characterized in that** the securing ring (3) and the crown ring (4) have a uniform outside diameter ($d_a$).

7.  Bolt-head securing arrangement (1) according to one of claims 1 to 3 or 6, **characterized in that** the inner circumference of the crown ring (4) is adapted in a form-locking manner to a key contour (9) of the bolt head (2), and the crown ring (4) that is arranged on the bolt head (2) in a torsion-resisting manner is coordinated with the securing ring (3), and the securing ring (3) and the crown ring (4) have grooves (12, 13) on the outer circumference that are spaced apart at regular intervals, with the number of the grooves between the securing ring (3) and the crown ring (4) differing by at least one groove, and **in that** one coupling element (5) has a securing cam (15) which is dimensioned to be of a thickness (t) in such a way that it engages into a groove channel (16) which is formed by two grooves arranged one after the other in the axial direction and which at the junction of the two grooves is at least of a width ($F_{min}$).

8.  Bolt-head securing arrangement (1) according to claim 7, **characterized in that** the grooves (12, 13) on the securing ring (3) and on the crown ring (4) are of a uniform width (w).

9.  Bolt-head securing arrangement (1) according to claim 7, **characterized in that** the grooves (12) are arranged at regular intervals ($a_0$) on the securing ring (3).

10. Bolt-head securing arrangement (1) according to claim 7, **characterized in that** the grooves (13) are arranged at regular intervals ($a_1$) on the crown ring.

11. Bolt-head securing arrangement (1) according to claim 7, **characterized in that** the groove channel (16) has a minimum width ($F_{min}$) that corresponds at least to the thickness (t) of the securing cam (15).

12. Bolt-head securing arrangement (1) according to claim 11, **characterized in that** the minimum width ($F_{min}$) of the groove channel (16) is formed at the junction between a groove of the securing ring (3) and a groove of the crown ring (4).

13. Bolt-head securing arrangement (1) according to claim 7, **characterized in that** the coupling elements (5) are formed by means of spring steel claws.


**Revendications**

1.  Dispositif de blocage de tête de boulon (1) comprenant une bague de blocage (3) qui est bloquée en rotation par complémentarité de formes au niveau d'un élément structurel (6) et est serrée entre une tête de boulon (2) et un élément structurel (6), et comprenant des éléments d'accouplement (5) qui sont en prise détachable avec la bague de blocage (3), **caractérisé en ce qu'**une bague formant couronne (4) disposée sans possibilité de rotation sur la tête de boulon (2) est associée coaxialement à la bague de blocage (3), et la bague de blocage (3) et la bague formant couronne (4) forment, sur la périphérie extérieure, par l'intermédiaire d'emplacements d'arrêt (A), un agencement de vernier (N) qui est bloqué par les éléments d'accouplement (5).

2.  Dispositif de blocage de tête de boulon (1) selon la revendication 1, **caractérisé en ce que** l'agencement de vernier (N) est formé par le fait que les emplacements d'arrêt (A, 12) de la bague de blocage (3) sont disposés à intervalles réguliers ($a_0$) de forme géométrique identique et la bague formant couronne (4) comporte, sur sa périphérie extérieure, à intervalles réguliers ($a_1$), les emplacements d'arrêt (A, 13) ou des éléments d'accouplement (5) de forme géométrique identique, le nombre d'emplacements d'arrêt (A, 12) sur la bague de blocage (3) et le nombre d'emplacements d'arrêt (A, 13) ou d'éléments d'accouplement (5) sur la bague formant couronne (4) différant d'au moins une unité, et un élément d'accouplement (5) pénétrant dans un emplacement d'arrêt (A, 12) de la bague de blocage (3) et y étant bloqué sans possibilité de rotation.

3.  Dispositif de blocage de tête de boulon (1) selon une des deux revendications 1 et 2, **caractérisé en ce que** les emplacements d'arrêt (A) sont conçus sous la forme de gorges (12, 13).

4.  Dispositif de blocage de tête de boulon (1) selon une des deux revendications 1 et 2, **caractérisé en ce que** les éléments d'accouplement (5) sont conçus sous la forme de griffes élastiques (FK).

5.  Dispositif de blocage de tête de boulon (1) selon une des deux revendications 1 et 2, **caractérisé en ce que** les éléments d'accouplement (5) sont conçus sous la forme de plots élastiques (FS).

6. Dispositif de blocage de tête de boulon (1) selon la revendication 1, **caractérisé en ce que** la bague de blocage (3) et la bague formant couronne (4) ont un diamètre extérieur identique ($d_a$).

7. Dispositif de blocage de tête de boulon (1) selon une des revendications 1 à 3 ou 6, **caractérisé en ce que**, sur sa périphérie intérieure, la bague formant couronne (4) est adaptée par complémentarité de formes à un contour de clé (9) de la tête de boulon (2), la bague formant couronne (4) disposée sans possibilité de rotation sur la tête de boulon (2) est associée à la bague de blocage (3), et la bague de blocage (3) et la bague formant couronne (4) comportent, sur leur périphérie extérieure, des gorges (12, 13) qui sont régulièrement espacées, le nombre de gorges entre la bague de blocage (3) et la bague formant couronne (4) différant d'au moins une gorge, et **en ce qu'**un élément d'accouplement (5) comporte un ergot de blocage (15) qui est dimensionné avec une épaisseur (t), de façon à pénétrer dans une enfilade de gorges (16) qui est formée au moyen de deux gorges disposées l'une derrière l'autre dans la direction axiale et qui, au niveau de la transition entre les deux gorges, présente au moins une largeur ($F_{min}$).

8. Dispositif de blocage de tête de boulon (1) selon la revendication 7, **caractérisé en ce que** les gorges (12, 13) sur la bague de blocage (3) et sur la bague formant couronne (4) possèdent une largeur identique (w).

9. Dispositif de blocage de tête de boulon (1) selon la revendication 7, **caractérisé en ce que** les gorges (12) sur la bague de blocage (3) sont disposées à intervalles réguliers ($a_0$).

10. Dispositif de blocage de tête de boulon (1) selon la revendication 7, **caractérisé en ce que** les gorges (13) sur la bague formant couronne sont disposées à intervalles réguliers ($a_1$).

11. Dispositif de blocage de tête de boulon (1) selon la revendication 7, **caractérisé en ce que** l'enfilade de gorges (16) possède une largeur minimale ($F_{min}$) qui correspond au moins à l'épaisseur (t) de l'ergot de blocage (15).

12. Dispositif de blocage de tête de boulon (1) selon la revendication 11, **caractérisé en ce que** la largeur minimale ($F_{min}$) de l'enfilade de gorges (16) est formée au niveau de la transition entre une gorge de la bague de blocage (3) et une gorge de la bague formant couronne (4).

13. Dispositif de blocage de tête de boulon (1) selon la revendication 7, **caractérisé en ce que** les éléments d'accouplement (5) sont formés au moyen de griffes en acier à ressorts.

Fig. 1

Fig. 2

Fig. 3

Fig. 4

Fig. 5

Fig. 6